# EUROPEAN PATENT SPECIFICATION

(11) **EP 1 267 096 B1**
(45) Date of publication and mention of the grant of the patent: **08.06.2005**
(21) Application number: 02013147.0
(22) Date of filing: 14.06.2002
(51) Int. Cl.: F16H 7/12

(54) **Drive belt tensioner**
Riemenspanner
Tendeur de courroie

(30) Priority: 15.06.2001 IT TO20010584
(43) Date of publication of application: 18.12.2002
(73) Proprietor: Dayco Europe S.r.l., 66013 Chieti (IT)
(72) Inventor: Cariccia, Gianluca, 10090 Romano Canavese (IT); Di Ciano, Graziano, 10090 Romano Canavese (IT)
(74) Representative: Franzolin, Luigi

(56) References cited:
- EP-A- 0 857 890
- DE-A- 10 044 125
- DE-A- 19 524 403
- US-A- 5 407 397
- US-A- 5 993 340

## Description

The present invention relates to a tensioner for a drive belt, particularly, though not exclusively, for a belt transmitting motion from the drive shaft of an internal combustion engine to auxiliary members powered by the engine.

Tensioners are known comprising a fixed portion connected rigidly to the engine or to a supporting structure integral with the engine; a movable portion hinged to the fixed portion about a first axis; a pulley carried by the movable portion and rotating, with respect to it, about a second axis distinct from and parallel to the first axis; and a spring interposed between the fixed and movable portions, and which loads the movable portion to keep the pulley engaged with the belt.

Any variation in the tension of the belt, caused by selective operation of the various accessories or by wear, is therefore compensated by a variation in deformation of the spring and by a corresponding shift in the axis of rotation of the pulley.

Since the belt transmits a pulsating load to the pulley, to limit oscillation and prevent resonance phenomena, damping means are normally provided between the fixed portion and the movable portion.

In one known embodiment described in US-A-5993340, the damping means comprise a damping member having a connecting portion fixed rigidly to the fixed portion, and an annular friction portion extending axially from the connecting portion and cooperating with a seat formed in the movable portion.

US-A-5 407 397 discloses a belt tensioner having the features of the preamble of claim 1.

It is an object of the present invention to provide a simplified tensioner of the type briefly described above, which can be produced and assembled as quickly and cheaply as possible.

According to the present invention, there is provided a tensioner for a drive belt as claimed in claim 1.

With reference to earlier application DE 10044125, the applicant has voluntarily limited the scope of the present application and submitted separate claims for DE.

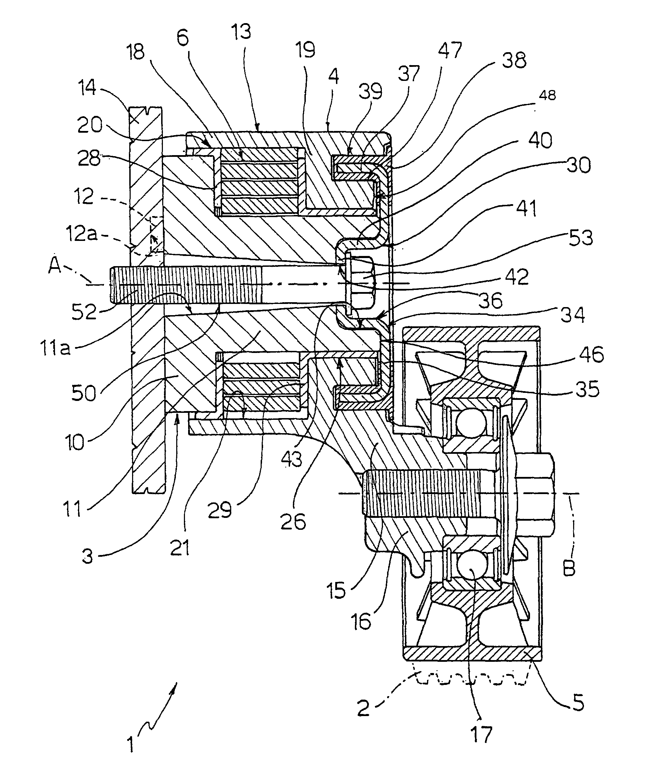

A preferred, non-limiting embodiment of the present invention will be described by way of example with reference to the accompanying drawing showing an axial section.

Number 1 in the accompanying drawing indicates as a whole a tensioner for a poly-V belt 2 powering the auxiliary members (not shown) of an internal combustion engine (not shown).

Tensioner 1 substantially comprises, in known manner, a fixed portion 3 connected rigidly to a supporting structure 14 defined, for example, by a plate supporting the auxiliary members and fixed to the crankcase of the engine, or by the crankcase itself; a movable portion 4 hinged to fixed portion 3 about a first axis A; a pulley 5 projecting from movable portion 4 and rotating, with respect to it, about a second axis B distinct from and parallel to first axis A; and a spring 6 interposed between fixed portion 3 and movable portion 4, and which loads the movable portion to keep pulley 5 engaged with belt 2.

More specifically, fixed portion 3 comprises, integrally, a flange 10 cooperating axially with supporting structure 14, and a tubular pin 11, of axis A, projecting axially from flange 10 and having a conical axial cavity 11a flaring towards flange 10. Flange 10 has a number of face teeth 12 engaging respective seats 12a in supporting structure 14 to secure fixed portion 3 angularly.

Movable portion 4 comprises, integrally, a hub 13 coaxial with and fitted in rotary manner to pin 11; an arm 15 projecting radially from hub 13; and a tubular portion 16, of axis B, connected integrally to one end of arm 15 to support pulley 5 by means of a bearing 17.

Hub 13 of movable portion 4 is substantially bell-shaped, and comprises a large-diameter first portion 18 and a small-diameter second portion 19 axially adjacent to each other.

Part of the axial length of first portion 18 surrounds flange 10, and is supported radially on flange 10 by a bush 20 which, together with flange 10, defines a torque with a predetermined friction coefficient. The rest of the length of first portion 18 defines, with pin 11, an annular chamber 21 housing spring 6, which is defined by a steel strip coiled about pin 11 and having an inner end (not shown) connected in known manner to pin 11, and an outer end (not shown) connected in known manner to portion 18.

Second portion 19 is supported radially on pin 11 with the interposition of a bush 26 defining, with pin 11, a torque with a predetermined friction coefficient.

Bush 20 and bush 26 have, respectively, a flat annular inner end flange 28 and a flat annular outer end flange 29, which cooperate axially with opposite sides of spring 6 and are interposed, respectively, between spring 6 and flange 10, and between spring 6 and second portion 19 of hub 13.

Tensioner 1 also comprises a damping member 30 interposed between pin 11 and movable portion 4.

Damping member 30 comprises an annular metal core 34 having a flat annular base wall 35, a substantially cylindrical central portion 36 extending axially from an inner edge of base wall 35, and a substantially cylindrical lateral wall 37 projecting from an outer periphery of base wall 35 and coaxial with central portion 36.

Damping member 30 also comprises a cover 38 made of plastic material and extending on a peripheral portion of base wall 35 and on the entire surface of lateral wall 37, so as to form, with lateral wall 37, an annular friction ring 39.

Central portion 36 comprises a cylindrical lateral wall 40; and a flat end wall 41 perpendicular to axis A and having an axial through hole 42.

Damping member 30 is fitted to fixed portion 3 so that central portion 36 is housed inside a cylindrical axial seat 43 formed in one end 46 of pin 11, and so that friction ring 39 engages a complementary annular seat 47 formed in an end face 48 of portion 19 of hub 13. The material of covering 38 is selected to define, with hub 13, a torque with a predetermined friction coefficient, and ensure adequate oscillation-damping properties in use. Friction ring 39 and seat 47 conveniently contact along both the inner and outer cylindrical surfaces of the ring.

According to the present invention, tensioner 1 comprises a single fastening member for fastening fixed portion 3 of the tensioner to supporting structure 14, and damping member 30 to fixed portion 3. The fastening member is conveniently defined by an axial screw 50 comprising a shank 52 fitted through hole 42 in central portion 36 of core 34, and through inner cavity 11a of pin 11, and which screws into supporting structure 14; and a head 53 housed in central portion 36 of the core and which grips core 34 to pin 11.

Operation of tensioner 1 is known and therefore not described in detail.

Oscillation of movable portion 4 with respect to fixed portion 3, in response to dynamic pulsating variations in the pull of belt 2, are damped by bushes 20 and 26 and by damping member 30.

According to the present invention, tensioner 1 is extremely cheap to produce and can be assembled quickly and easily, by screw 50 fastening tensioner 1 to supporting structure 14, and also fastening damping member 30 to fixed portion 3 of tensioner 1.

Clearly, changes may be made to tensioner 1 as described herein without, however, departing from the scope of the present invention.

## Claims (Claims for the following Contracting State(s): ES, FR, GB)

1. A tensioner (1) for a drive belt (2), of the type comprising a fixed portion (3); first connecting means (50) for connecting said fixed portion (3) rigidly to a supporting structure (14); a movable portion (4) hinged to said fixed portion (3) about a first axis (A); a pulley (5) carried by said movable portion (4) and rotating, with respect to it, about a second axis (B) distinct from and parallel to said first axis (A); elastic means (6) interposed between said fixed portion (3) and said movable portion (4), and for loading, in use, said movable portion (4) to keep said pulley (5) engaged with said belt (2); a friction damping member (30) interposed between said fixed portion (3) and said movable portion (4), and having a connecting portion (36) fixed to said fixed portion (3), and a friction portion (39) cooperating with said movable portion (4); and second connecting means (50) for fixing said connecting portion (36) to said fixed portion (3); said first and second connecting means being defined by a single connecting member (50); said fixed portion (3) comprising a flange (10) cooperating with said supporting structure (14), and a tubular pin (11) defining said first axis (A); **characterised in that** said connecting member is defined by a screw (50) comprising a shank fitted through said pin (11) and through said connecting portion (36) of said damping member (30), and a head (52) for gripping said connecting portion (36) to one end (46) of said pin (11).

2. A tensioner as claimed in Claim 1, **characterized in that** said connecting portion (36) is substantially cylindrical, houses said head (52) of said screw (50), and is housed in a correspondingly shaped seat (43) formed in said end (46) of said pin (11).

3. A tensioner as claimed in one of the foregoing Claims, **characterized in that** said movable portion (4) comprises a hub (13) fitted in rotary manner to said pin (11); and **in that** said friction portion (39) of said damping member (30) is defined by a ring externally coaxial with said connecting portion (36) and engaging a corresponding annular seat (47) formed on an end face (49) of said hub (13).

4. A tensioner as claimed in Claim 3, **characterized in that** said damping member (30) comprises a metal core (34); and a friction cover (38) extending at least on said friction portion (39).

## Claims (Claims for the following Contracting State(s): DE)

1. A tensioner (1) for a drive belt (2), of the type comprising a fixed portion (3); first connecting means (50) for connecting said fixed portion (3) rigidly to a supporting structure (14); a movable portion (4) hinged to said fixed portion (3) about a first axis (A); a pulley (5) carried by said movable portion (4) and rotating, with respect to it, about a second axis (B) distinct from and parallel to said first axis (A); elastic means (6) interposed between said fixed portion (3) and said movable portion (4), and for loading, in use, said movable portion (4) to keep said pulley (5) engaged with said belt (2); a friction damping member (30) interposed between said fixed portion (3) and said movable portion (4), and having a connecting portion (36) fixed to said fixed portion (3), and a friction portion (39) cooperating with said movable portion (4); and second connecting means (50) for fixing said connecting portion (36) to said fixed portion (3); said first and second connecting means being defined by a single connecting member (50); said fixed portion (3) comprising a flange (10) cooperating with said supporting structure, and a tubular pin (11) defining said first axis (A); said connecting member being defined by a screw (50) comprising a shank fitted through said pin (11) and through said connecting portion (36) of said damping member (30), and a head (52) for gripping said connecting portion (36) to one end (46) of said pin (11); said movable portion (4) comprising a hub (13) fitted in rotary manner to said pin (11); **characterised in that** said friction portion (39) of said damping member (30) is defined by a cylindrical ring externally coaxial with said connecting portion (36) and engaging a corresponding annular seat (47) formed on an end face (49) of said hub (13).

2. A tensioner as claimed in Claim 2, **characterized in that** said connecting portion (36) is substantially cylindrical, houses said head (52) of said screw (50), and is housed in a correspondingly shaped seat (43) formed in said end (46) of said pin (11).

3. A tensioner as claimed in Claim 1 or 2, **characterized in that** said damping member (30) comprises a metal core (34); and a friction cover (38) extending at least on said friction portion (39).

## Patentansprüche (Patentansprüche für folgende(n) Vertragsstaat(en): ES, FR, GB)

1. Spannvorrichtung (1) für einen Treibriemen (2), mit einem feststehenden Teil (3); einer ersten Verbindungseinrichtung (50) zum starren Verbinden des ersten Teils (3) mit einer Stützstruktur (14); einem bewegbaren Teil (4), das um eine erste Achse (A) an dem ersten Teil (3) angelenkt ist; einer Riemenscheibe (5), die von dem bewegbaren Teil (4) getragen ist und in bezug auf dieses um eine zweite Achse (B) dreht, die von der ersten Achse (A) verschieden und zu dieser parallel ist; einer elastischen Einrichtung (6) zwischen dem feststehenden Teil (3) und dem bewegbaren Teil (4) und zum Belasten des bewegbaren Teils (4) im Betrieb, um die Riemenscheibe (5) in Eingriff mit dem Riemen (2) zu halten; einem Reibungsdämpfungselement (30) zwischen dem feststehenden Teil (3) und dem bewegbaren Teil (4) und mit einem an dem feststehenden Teil (3) angebrachten Verbindungsteil (36) und einem mit dem bewegbaren Teil (4) zusammenwirkenden Reibungsteil (39); und einer zweiten Verbindungseinrichtung (50) zum Befestigen des Verbindungsteils (36) an dem feststehenden Teil (3); wobei die erste und die zweite Verbindungseinrichtung durch ein einzelnes Verbindungselement (50) gebildet sind; wobei das feststehende Teil (3) einen Flansch (10), der mit der Stützstruktur (14) zusammenwirkt, und einen rohrförmigen Stift (11) aufweist, der die erste Achse (A) bildet, **dadurch gekennzeichnet, daß** das Verbindungselement durch eine Schraube (50) gebildet ist, die einen durch den Stift (11) und durch das Verbindungsteil (36) des Dämpfungselements (30) gesteckten Schaft und einen Kopf (53) zum Fixieren des Verbindungsteils (36) an einem Ende (46) des Stifts (11) aufweist.

2. Spannvorrichtung nach Anspruch 1, **dadurch gekennzeichnet, daß** das Verbindungsteil (36) im wesentlichen zylindrisch ist, den Kopf (53) der Schraube (50) aufnimmt und in einem entsprechend geformten Sitz (43) aufgenommen ist, der in dem Ende (46) des Stifts (11) gebildet ist.

3. Spannvorrichtung nach einem der vorhergehenden Ansprüche, **dadurch gekennzeichnet, daß** der bewegbare Teil (4) eine drehbar auf den Stift (11) gesetzte Nabe (13) aufweist, und daß das Reibungsteil (39) des Dämpfungselements (30) durch einen Ring gebildet ist, der auf der Außenseite koaxial mit dem Verbindungsteil (36) ist und in einen entsprechenden ringförmigen Sitz (47) eingreift, der an einer Endfläche (49) der Nabe (13) ausgebildet ist.

4. Spannvorrichtung nach Anspruch 3, **dadurch gekennzeichnet, daß** das Dämpfungselement (30) einen Metallkern (34) und eine Reibungshülle (38) aufweist, die sich zumindest auf dem Reibungsteil (39) erstreckt.

## Patentansprüche (Patentansprüche für folgende(n) Vertragsstaat(en): DE)

1. Spannvorrichtung (1) für einen Treibriemen (2), mit einem feststehenden Teil (3); einer ersten Verbindungseinrichtung (50) zum starren Verbinden des ersten Teils (3) mit einer Stützstruktur (14); einem bewegbaren Teil (4), das um eine erste Achse (A) an dem ersten Teil (3) angelenkt ist; einer Riemenscheibe (5), die von dem bewegbaren Teil (4) getragen ist und in bezug auf dieses um eine zweite Achse (B) dreht, die von der ersten Achse (A) verschieden und zu dieser parallel ist; einer elastischen Einrichtung (6) zwischen dem feststehenden Teil (3) und dem bewegbaren Teil (4) und zum Belasten des bewegbaren Teils (4) im Betrieb, um die Riemenscheibe (5) in Eingriff mit dem Riemen (2) zu halten; einem Reibungsdämpfungselement (30) zwischen dem feststehenden Teil (3) und dem bewegbaren Teil (4) und mit einem an dem feststehenden Teil (3) angebrachten Verbindungsteil (36) und einem mit dem bewegbaren Teil (4) zusammenwirkenden Reibungsteil (39); und einer zweiten Verbindungseinrichtung (50) zum Befestigen des Verbindungsteils (36) an dem feststehenden Teil (3); wobei die erste und die zweite Verbindungseinrichtung durch ein einzelnes Verbindungselement (50) gebildet sind; wobei das feststehende Teil (3) einen Flansch (10), der mit der Stützstruktur zusammenwirkt, und einen rohrförmigen Stift (11) aufweist, der die erste Achse (A) bildet; wobei das Verbindungselement durch eine Schraube (50) gebildet ist, die einen durch den Stift (11) und durch das Verbindungsteil (36) des Dämpfungselements (30) gesteckten Schaft und einen Kopf (53) zum Fixieren des Verbindungsteils (36) an einem Ende (46) des Stifts (11) aufweist; wobei der bewegbare Teil (4) eine drehbar auf den Stift (11) gesetzte Nabe (13) aufweist, **dadurch gekennzeichnet, daß** das Reibungsteil (39) des Dämpfungselements (30) durch einen zylindrischen Ring gebildet ist, der auf der Außenseite koaxial mit dem Verbindungsteil (36) ist und in einen entsprechenden ringförmigen Sitz (47) eingreift, der an einer Endfläche (49) der Nabe (13) ausgebildet ist.

2. Spannvorrichtung nach Anspruch 1, **dadurch gekennzeichnet, daß** das Verbindungsteil (36) im wesentlichen zylindrisch ist, den Kopf (53) der Schraube (50) aufnimmt und in einem entsprechend geformten Sitz (43) aufgenommen ist, der in dem Ende (46) des Stifts (11) gebildet ist.

3. Spannvorrichtung nach Anspruch 1 oder 2, **dadurch gekennzeichnet, daß** das Dämpfungselement (30) einen Metallkern (34) und eine Reibungshülle (38) aufweist, die sich zumindest auf dem Reibungsteil (39) erstreckt.

## Revendications (Revendications pour l'(les) Etat(s) contractant(s) suivant(s): ES, FR, GB)

1. Tendeur (1) pour une courroie d'entraînement (2) du type comprenant une partie fixe (3), un premier moyen de liaison (50) destiné à relier ladite partie fixe (3) rigidement à une structure de support (14), une partie mobile (4) articulée sur ladite partie fixe (3) autour d'un premier axe (A), une poulie (5) portée par ladite partie mobile (4) et tournant, par rapport à elle, autour d'un second axe (B) distinct dudit premier axe (A) et parallèle à celui-ci, un moyen élastique (6) interposé entre ladite partie fixe (3) et ladite partie mobile (4) et destiné à appliquer une charge, en utilisation, sur ladite partie mobile (4) pour maintenir ladite poulie (5) engagée avec ladite courroie (2), un élément amortissant le frottement (30) interposé entre ladite partie fixe (3) et ladite partie mobile (4) et comportant une partie de liaison (36) fixée à ladite partie fixe (3), et une partie de frottement (39) coopérant avec ladite partie mobile (4), et un second moyen de liaison (50) destiné à fixer ladite partie de liaison (36) à ladite partie fixe (3), lesdits premier et second moyens de liaison étant définis par un seul élément de liaison (50),
ladite partie fixe (3) comprenant une bride (10) coopérant avec ladite structure de support (14) et une broche tubulaire (11) définissant ledit premier axe (A), **caractérisé en ce que** ledit élément de liaison est défini par une vis (50) comprenant une tige insérée au travers de ladite broche (11) et au travers de ladite partie de liaison (36) dudit élément amortissant (30), et une tête (53) destinée à serrer ladite partie de liaison (36) sur une extrémité (46) de ladite broche (11).

2. Tendeur selon la revendication 1, **caractérisé en ce que** ladite partie de liaison (36) est sensiblement cylindrique, reçoit ladite tête (53) de ladite vis (50) et est reçue dans un siège de forme correspondante (43) formé dans ladite extrémité (46) de ladite broche (11).

3. Tendeur selon l'une des revendications précédentes, **caractérisé en ce que** ladite partie mobile (4) comprend un moyeu (13) monté de manière rotative sur ladite broche (11), et **en ce que** ladite partie de frottement (39) dudit élément amortissant (30) est définie par une bague extérieurement coaxiale avec ladite partie de liaison (36) et en contact avec un siège annulaire correspondant (47) formé sur une face d'extrémité (49) dudit moyeu (13).

4. Tendeur selon la revendication 3, **caractérisé en ce que** ledit élément amortissant (30) comprend un élément central métallique (34) et un revêtement anti-friction (38) s'étendant au moins sur ladite partie de frottement (39).

## Revendications (Revendications pour l'(les) Etat(s) contractant(s) suivant(s): DE)

1. Tendeur (1) pour une courroie d'entraînement (2) du type comprenant une partie fixe (3), un premier moyen de liaison (50) destiné à relier ladite partie fixe (3) rigidement à une structure de support (14), une partie mobile (4) articulée sur ladite partie fixe (3) autour d'un premier axe (A), une poulie (5) portée par ladite partie mobile (4) et tournant, par rapport à elle, autour d'un second axe (B) distinct dudit premier axe (A) et parallèle à celui-ci, un moyen élastique (6) interposé entre ladite partie fixe (3) et ladite partie mobile (4) et destiné à appliquer une charge, en utilisation, sur ladite partie mobile (4) pour maintenir ladite poulie (5) engagée avec ladite courroie (2), un élément amortissant le frottement (30) interposé entre ladite partie fixe (3) et ladite partie mobile (4) et comportant une partie de liaison (36) fixée à ladite partie fixe (3), et une partie de frottement (39) coopérant avec ladite partie mobile (4), et un second moyen de liaison (50) destiné à fixer ladite partie de liaison (36) à ladite partie fixe (3), lesdits premier et second moyens de liaison étant définis par un seul élément de liaison (50),
ladite partie fixe (3) comprenant une bride (10) coopérant avec ladite structure de support, et une broche tubulaire (11) définissant ledit premier axe (A), ledit élément de liaison étant défini par une vis (50) comprenant une tige insérée au travers de ladite broche (11) et au travers de ladite partie de liaison (36) dudit élément amortissant (30), et une tête (53) destinée à serrer ladite partie de liaison (36) à une extrémité (46) de ladite broche (11), ladite partie mobile (4) comprenant un moyeu (13) monté de manière rotative sur ladite broche (11), **caractérisé en ce que** ladite partie de frottement (39) dudit élément amortissant (30) est définie par une bague cylindrique extérieurement coaxiale avec ladite partie de liaison (36) et en contact avec un siège annulaire correspondant (47) formé sur une face d'extrémité (49) dudit moyeu (13).

2. Tendeur selon la revendication 2, **caractérisé en ce que** ladite partie de liaison (36) est sensiblement cylindrique, reçoit ladite tête (53) de ladite vis (50) et est reçue dans un siège de forme correspondante (43) formé dans ladite extrémité (46) de ladite broche (11).

3. Tendeur selon la revendication 1 ou 2, **caractérisé en ce que** ledit élément amortissant (30) comprend un élément central métallique (34) et un revêtement anti-friction (38) s'étendant au moins sur ladite partie de frottement (39).
